# EUROPÄISCHE PATENTSCHRIFT

(11) **EP 4 074 161 B1**
(45) Veröffentlichungstag und Bekanntmachung des Hinweises auf die Patenterteilung: **19.02.2025**
(21) Anmeldenummer: 22167275.1
(22) Anmeldetag: 08.04.2022
(51) Int. Cl.: A01D 78/10

(54) **HEUWERBUNGSMASCHINE MIT FANGELEMENT**
HAYMAKING MACHINE WITH CATCHING ELEMENT
MACHINE À RÉCOLTER LE FOIN POURVUE D'ÉLÉMENT D'ARRÊT

(30) Priorität: 16.04.2021 DE 102021109631
(43) Veröffentlichungstag der Anmeldung: 19.10.2022
(73) Patentinhaber: Maschinenfabrik Bernard Krone GmbH & Co. KG, 48480 Spelle (DE)
(72) Erfinder: Hemker, Johannes, 48739 Legden (DE); Helper, Erik, 48465 Quendorf (DE)

(56) Entgegenhaltungen:
- DE-A1- 2 645 127
- DE-T2- 69 207 987
- DE-U1- 202009 003 439

## Beschreibung

Die vorliegende Erfindung betrifft eine Heuwerbungsmaschine nach dem Oberbegriff von Anspruch 1.

Heuwerbungsmaschinen wie Zetter oder Schwader dienen in der Landwirtschaft dazu, geschnittenes Gras bzw. Heu auf dem Feld zu wenden (bzw. zu zetten) und/oder zu Schwaden zusammenzubringen. Ein gängiger Typ von Heuwerbungsmaschine verwendet einen oder mehrere rotierende Rechkreisel, bei denen jeweils eine Mehrzahl von Zinkenarmen um eine gemeinsame Achse rotiert. Jeder Zinkenarm trägt endseitig eine Mehrzahl von Zinken, die bodennah über das Feld geführt werden können und dabei das Halmgut erfassen. Das erfasste Halmgut wird über eine gewisse Wegstrecke von den Zinken mitgeführt, bevor es ab- bzw. hochgeschleudert wird und an anderer Stelle wieder auf dem Feld landet. Um den Ablageort wenigstens ungefähr zu kontrollieren, ist oftmals wenigstens ein Fangelement (z.B. ein Pralltuch) vorgesehen, das in einer Aktivposition radial außerhalb der Bewegungsbahn der Zinken angeordnet werden kann. Während das Fangelement in der Aktivposition in etwa senkrecht verläuft, ist es mit dem Rahmen der Heuwerbungsmaschine über einen Tragarm verbunden, der in etwa waagerecht verläuft und z.B. in der Nähe der Rotationsachse des Rechkreisels mit dem Rahmen verbunden sein kann. Mit dem Tragarm ist in der Regel auch ein z.B. bügelartiger Kreiselschutz verbunden, der in der Aktivposition radial außerhalb und oberhalb der Bewegungsbahn des Rechkreisels angeordnet ist, um Kollisionen der rotierenden Zinken mit anderen Objekten zu verhindern. Dabei ist es zum einen bekannt, den Tragarm mit dem Fangelement aufwärts in eine Passivposition zu schwenken, wenn das Fangelement nicht benötigt wird oder z.B. für eine Straßenfahrt die Breite der Heuwerbungsmaschine verringert werden muss. Zum anderen ist es bekannt, in der Aktivposition die Länge des Tragarms zu verstellen, diesen also ein- oder auszufahren, um so das Fangelement in unterschiedlicher radialer Entfernung von der Rotationsachse zu positionieren. Hierdurch kann z.B. die Breite eines gelegten Schwads variiert werden. Das Schwenken einerseits sowie das Ausfahren des Tragarms andererseits erfolgen heutzutage motorisch mittels zweier separater Antriebselemente, z.B. Hydraulikzylinder.

Die Druckschrift DE 692 07 987 T2 offenbart eine Heuwerbungsmaschine mit einem Hydraulikzylinder, der sich über einem Rechrad befindet, und der mit einer Verstellstange derart verbunden ist, dass er sie verschieben kann, um die Lage eines Schwadformers zu ändern. Die Heuwerbungsmaschine ist ferner mit Mitteln zum Verschwenken des Schwadformers versehen, wenn er mittels des Hydraulikzylinders verstellt wird.

Die Druckschrift DE 26 45 127 A1 offenbart eine Heuwerbungsmaschine mit zwei nebeneinanderliegenden Rotoren, welche in eine Lage einstellbar sind, in der sie das Heu zwischen sich nach hinten befördern, sowie in eine Lage, in der sie das Heu an ihrer Vorderseite entlang befördern und es an einer Außenseite neben den hinteren Rotor auf einen Schwad legen.

Die Druckschrift DE 20 2009 003 439 U1 offenbart eine Heuwerbungsmaschine mit einem Prallelement für Erntegut, wobei das Prallelement beim Verbringen von einer abgesenkten Arbeitsstellung in eine angehobene Transportstellung und/oder umgekehrt in einer im wesentlichen aufrechten Ausrichtung gehalten wird.

Aufgabe der Erfindung ist es, einen zuverlässigen sowie vereinfachten Stellmechanismus für ein Fangelement eines Rechkreisels vorzuschlagen.

Die Aufgabe wird gelöst mit einer Heuwerbungsmaschine mit den Merkmalen des unabhängigen Patentanspruchs 1. Vorteilhafte Ausführungsformen sind den abhängigen Ansprüchen entnehmbar.

Dafür wird eine Heuwerbungsmaschine geschaffen, mit einem Rechkreisel sowie einem diesem zugeordneten Fangelement, welches über einen Tragarm mit einem Rahmen verbunden ist, wobei ein Basisteil des Tragarms um eine Tragarmachse schwenkbar mit dem Rahmen verbunden ist, um den Tragarm zwischen einer abgesenkten Aktivposition und einer angehobenen Passivposition zu verschwenken, und ein Verschiebeteil, mit dem das Fangelement verbunden ist, gegenüber dem Basisteil zwischen einer Innenposition und einer weiter von der Tragarmachse entfernten Außenposition verschiebbar ist, um eine Längenverstellung des Tragarms zu bewirken.

Die Heuwerbungsmaschine ist allgemein dazu vorgesehen, Halmgut wie Gras oder Heu auf einem Feld zu erfassen, zu wenden, zu verteilen und/oder zu Schwaden zusammenzulegen. Sie kann insbesondere dazu vorgesehen sein, von einer Zugmaschine bzw. einem Schlepper gezogen zu werden. Dabei kann ein Rahmen der Heuwerbungsmaschine über eine Deichsel an den Schlepper angekoppelt werden. An dem Rahmen ist wenigstens ein Rechkreisel, oftmals eine Mehrzahl von Rechkreiseln, angeordnet. Jeder Rechkreisel ist um eine aufwärts, aber nicht notwendigerweise senkrecht, verlaufende Rotationsachse bzw. Kreiselachse gegenüber dem Rahmen drehbar. Die Antriebskraft für die Drehung kann vom Schlepper übertragen werden, z.B. über eine Zapfwelle. Der Rechkreisel weist üblicherweise eine Mehrzahl von Zinkenarmen auf, die nach außen von der Kreiselachse abragen. Jeder Zinkenarm trägt wiederum eine Mehrzahl von Zinken, mit denen das Halmgut erfasst wird. Optional kann der Zinkenarm bzw. ein Teil des Zinkenarms, mit dem die Zinken verbunden sind, um seine Längsachse schwenkbar sein, so dass die Zinken abwechselnd in eine bodennahe Stellung sowie in eine bodenferne Stellung geschwenkt werden können.

Dem (bzw. wenigstens einem) Rechkreisel ist ein Fangelement zugeordnet. Das Fangelement kann z.B. als starre Platte oder Gitter oder insbesondere als flexibles Fangtuch bzw. Schwadtuch ausgebildet sein. Seine Funktion besteht darin, den Bewegungsraum des Halmguts zu begrenzen, das vom Rechkreisel erfasst und hoch- bzw. fortgeschleudert wird. D.h. das Halmgut prallt gegen das Fangelement und fällt in der Nähe desselben zu Boden. Hierdurch kann z.B. in der Nähe des Fangelements ein Schwad gelegt werden. Das Fangelement ist über einen Tragarm mit dem Rahmen verbunden, d.h. der Tragarm bildet die Verbindung bzw. Aufhängung des Fangelement gegenüber dem Rahmen. Ein Basisteil des Tragarms ist um eine Tragarmachse schwenkbar mit dem Rahmen verbunden, um den Tragarm zwischen einer abgesenkten Aktivposition und einer angehobenen Passivposition zu verschwenken. Entsprechend verläuft die Tragarmachse in der normalen Betriebsposition der Heuwerbungsmaschine nicht senkrecht, sondern bspw. waagerecht oder in einem geringen Winkel (kleiner 30°) zur Waagerechten. Durch eine Schwenkbewegung um diese Tragarmachse kann der Tragarm entweder abgesenkt werden in eine Aktivposition, in der er bspw. waagerecht verlaufen kann und in der das Fangelement bodennah positioniert ist, oder angehoben werden in eine Passivposition, in der das Fangelement vom Boden (deutlich) abgehoben ist. Wenngleich hier von "einer" Passivposition die Rede ist, sollte klar sein, dass mehrere Passivpositionen möglich sind, bspw. eine leicht angehobene Position für das Durchfahren eines Vorgewendes und eine stärker angestellte gehobene Position für die Straßenfahrt. Der Basisteil kann einen Kreiselschutz für den Rechkreisel aufweisen, welcher zusammen mit dem Basisteil verschwenkbar ist. Der Kreiselschutz kann z.B. als Bügel ausgebildet sein und dient dazu, eine Kollision zwischen dem sich drehenden Rechkreisel und anderen Objekten zu vermeiden. Ein Verschiebeteil, mit dem das Fangelement verbunden ist, ist gegenüber dem Basisteil zwischen einer Innenposition und einer weiter von der Tragarmachse entfernten Außenposition verschiebbar. Der Verschiebeteil ist Teil des Tragarms und translatorisch gegenüber dem Basisteil verschiebbar. Insbesondere kann der Basisteil ein Hohlprofil aufweisen, in welchem der Verschiebeteil teilweise aufgenommen ist, um eine teleskopierende Bewegung zu ermöglichen. Durch das Verschieben des Verschiebeteils erfolgt eine Längenverstellung des Tragarms.

Erfindungsgemäß ist durch einen zwischen dem Rahmen und dem Verschiebeteil wirkenden Linearantrieb der Verschiebeteil in die Innenposition verschiebbar und der Tragarm in die Passivposition verschwenkbar, wobei ein Rückhaltemechanismus dazu eingerichtet ist, den Tragarm in der Aktivposition zu halten, bis der Verschiebeteil die Innenposition erreicht hat. Der Linearantrieb wirkt zwischen dem Rahmen und dem Verschiebeteil, wobei er wenigstens dazu eingerichtet ist, eine Zugkraft zu erzeugen und den Verschiebeteil in Richtung auf den Rahmen zu ziehen. Hieraus resultiert zunächst die Verstellung des Verschiebeteils in die Innenposition, man könnte auch sagen, das Einfahren des Verschiebeteils mit dem daran angeordneten Fangelement. Darüber hinaus wird durch die Zugkraft auch das Aufwärtsschwenken des Tragarms in die Passivposition erreicht. Dies beruht auf der Verbindung von Basisteil und Verschiebeteil, wobei der Linearantrieb ein Drehmoment bezüglich der Tragarmachse erzeugt. Um dies zu erreichen, ist der Linearantrieb (bzw. die Verbindungslinie seiner Angriffspunkte am Rahmen und am Verschiebeteil) nicht-radial bezüglich der Tragarmachse ausgerichtet. Bspw. kann der Linearantrieb über eine Antriebs-Schwenkachse mit dem Rahmen verbunden sein, welche oberhalb der Tragarmachse und oberhalb des Basisteils angeordnet ist. Um bei senkrechter Ausrichtung des Tragarms noch ein ausreichendes Drehmoments zu gewährleisten, sollte die Antriebs-Schwenkachse außerdem horizontal gegenüber der Tragarmachse versetzt sein, und zwar auf einer dem Fangelement gegenüberliegenden Seite. Der Linearantrieb kann insbesondere als Zylinder ausgebildet sein bzw. einen Zylinder aufweisen, z.B. einen hydraulischen, elektrohydraulischen oder pneumatischen Zylinder.

Es werden somit mittels eines einzigen Linearantriebs zwei Einstellbewegungen realisiert. Um diese für den Benutzer in nachvollziehbarer, wiederholbare Weise voneinander zu trennen, ist der erfindungsgemäße Rückhaltemechanismus vorgesehen, der den Tragarm in der Aktivposition hält, bis der Verschiebeteil die Innenposition erreicht hat. D. h., während der Verschiebeteil sich in der Außenposition oder zwischen Außenposition und Innenposition befindet, ist der Tragarm gewissermaßen in der Aktivposition arretiert. Somit wird ein ungewolltes Schwenken des Tragarms und ein hiermit verbundenes Abheben des Fangelements vom Boden während der Längenverstellung des Tragarms verhindert. Wenn der Verschiebeteil die Innenposition erreicht hat, gibt der Rückhaltemechanismus den Tragarm frei, so dass dieser in die Passivposition geschwenkt werden kann. Über den Rückhaltemechanismus ist die Schwenkbarkeit des Tragarms in die Passivposition also kausal daran gekoppelt, dass der Verschiebeteil die Innenposition erreicht hat. Es versteht sich, dass der Linearantrieb in aller Regel auch eine zu der oben erwähnten Zugkraft entgegengesetzte Druckkraft ausüben kann, durch welche der Tragarm aus der Passivposition in die Aktivposition geschwenkt und der Verschiebeteil in Richtung auf die Außenposition verstellt, also ausgefahren werden kann.

Grundsätzlich wäre es denkbar, die Position des Verschiebeteils über einen Sensor zu detektieren, der ein Signal erzeugt, das wiederum den Rückhaltemechanismus ansteuert. Eine solche Ausgestaltung ist allerdings aufwendig und im Allgemeinen auch störungsanfällig. Daher ist es bevorzugt, dass der Verschiebeteil mechanisch mit dem Rückhaltemechanismus zusammenwirkt. Dabei erfolgt direkt oder indirekt eine mechanische Kraftübertragung vom Verschiebeteil auf den Rückhaltemechanismus.

Bevorzugt ist vorgesehen, dass der Rückhaltemechanismus ein verstellbar am Rahmen angeordnetes Rückhalteelement aufweist, das in einer Verriegelungsposition mit dem Basisteil eingreift und diesen in einer Freigabeposition freigibt. Das Rückhalteelement kann dabei insbesondere einteilig ausgebildet sein. Das Rückhalteelement ist wenigstens zwischen der genannten Verriegelungsposition und der Freigabeposition verstellbar. Normalerweise stellt das Rückhalteelement in der Verriegelungsposition einen Formschluss mit dem Basisteil her, wodurch dieser gegenüber dem Rahmen zurückgehalten oder arretiert wird. Zusätzlich oder alternativ kann das Rückhalteelement auch einen Kraftschluss mit dem Basisteil herstellen. Der Basisteil kann indirekt oder auch direkt mechanisch mit dem Rückhalteelement zusammenwirken.

Vorteilhaft ist das Rückhalteelement schwenkbar am Rahmen angeordnet. D.h. es ist zwischen der Verriegelungsposition und der Freigabeposition schwenkbar. Die schwenkbare Verstellung hat den Vorteil, dass sie nur ein Drehlager erfordert statt z.B. einer Führungsschiene oder dergleichen, welche für eine translatorische Verstellung erforderlich wäre.

Das Rückhalteelement kann vorteilhaft über ein erstes Federelement mit dem Rahmen verbunden sein, welches das Rückhalteelement in Richtung auf die Verriegelungsposition beaufschlagt. D.h. sofern keine sonstigen Kräfte auf das Rückhalteelement wirken, wird es durch das erste Federelement in der Verriegelungsposition gehalten bzw. in diese bewegt. Hierdurch wird auch eine zuverlässige Arretierung des Tragarms gewährleistet. Das erste Federelement kann z.B. als Torsionsfeder oder als Zugfeder ausgebildet sein. Bei Annäherung an die Innenposition wird die Federkraft des ersten Federelements durch die direkte oder indirekte Einwirkung des Verschiebeteils überwunden.

Vorteilhaft ist der Verschiebeteil dazu eingerichtet, bei Annäherung an die Innenposition unmittelbar auf das Rückhalteelement einzuwirken und dieses aus der Verriegelungsposition zu schieben. Hierdurch wird der gesamte Mechanismus einfach gehalten, da auf zwischengeordnete Elemente zur Kraftübertragung zwischen Verschiebeteil und Rückhalteelement verzichtet wird.

Eine bevorzugte Ausführungsform sieht vor, dass das Rückhalteelement in der Verriegelungsposition teilweise in eine Ausnehmung des Basisteils eingeführt ist, wobei ein Rückhalteabschnitt des Rückhalteelements einen randseitig der Ausnehmung ausgebildeten Randabschnitt des Basisteils hintergreift. Der Basisteil kann z.B. ein Hohlprofil aufweisen, innerhalb dessen auch der Verschiebeteil verschiebbar geführt ist. Die Ausnehmung kann als Öffnung oder Ausschnitt in einer Wandung des Hohlprofils ausgebildet sein. Das Rückhalteelement ist in der Verriegelungsposition teilweise in diese Ausnehmung eingeführt. Am Rand der Ausnehmung ist ein Randabschnitt ausgebildet, den das Rückhalteelement mit einem Rückhalteabschnitt hintergreift. Es wird somit durch den Rückhalteabschnitt und den Randabschnitt ein Formschluss zwischen dem Rückhalteelement und dem Basisteil hergestellt, der zur Verriegelung führt. Der Rückhalteabschnitt ist normalerweise als Vorsprung am Rückhalteelement ausgebildet.

Vorteilhaft weist das Rückhalteelement einen Rampenabschnitt auf, mit welchem der Basisteil bei Annäherung an die Aktivposition zusammenwirkt, um das Rückhalteelement aus der Verriegelungsposition zu schieben. Das Verschieben des Rückhalteelements kann insbesondere das Einführen in die Ausnehmung des Basisteils ermöglichen. Der Rampenabschnitt ist derart abgeschrägt gegenüber der Bewegungsrichtung des Basisteils, dass sich durch das Zusammenwirken eine Kraftumlenkung ergibt, die das Rückhalteelement verschiebt. Dabei gleiten der Basisteil und der Rampenabschnitt aneinander entlang. Insbesondere können der o.g. Randabschnitt und der Rampenabschnitt miteinander zusammenwirken. D.h. der Randabschnitt schiebt zunächst durch Zusammenwirken mit dem Rampenabschnitt das Rückhalteelement aus der Rückhalteposition, so dass es in die Ausnehmung eingeführt werden kann, bevor es wieder in die Rückhalteposition zurückkehrt, in der der Rückhalteabschnitt den Randabschnitt hintergreift. Der Verschiebeteil kann bei Annäherung an die Innenposition ebenfalls mit dem Rampenabschnitt zusammenwirken, um das Rückhalteelement aus der Rückhalteposition zu schieben.

Während der Verriegelungsmechanismus verhindert, dass der Tragarm aufwärts schwenkt, bevor der Verschiebeteil eingefahren ist, kann er in der Regel nicht verhindern, dass der Verschiebeteil ausgefahren wird, bevor der Tragarm aus der Passivposition abwärts in die Aktivposition verschwenkt wurde. Dem wird in einer Weiterbildung der Erfindung dadurch entgegengewirkt, dass der Basisteil über ein zweites Federelement mit dem Rahmen verbunden ist, welches den Basisteil in Richtung auf die Aktivposition beaufschlagt. Das zweite Federelement erzeugt ein Drehmoment in Richtung auf die Aktivposition, so dass das Abwärtsschwenken des Tragarms unterstützt wird. Es kann z.B. als Torsionsfeder oder als Zugfeder ausgebildet sein. Die Stärke des zweiten Federelements kann in Relation zur Stärke des Linearantriebs so gewählt werden, dass das Schwenken in die Passivposition nur unwesentlich behindert wird.

Bevorzugt ist der Linearantrieb dazu eingerichtet, beim Verstellen des Verschiebeteils mit einer höheren Stellgeschwindigkeit zu arbeiten als beim Verschwenken des Tragarms. D.h. das Verstellen des Verschiebeteils erfolgt vergleichsweise schnell, während das Schwenken des Tragarms langsamer erfolgt. Man kann auch von einer Dämpfung des Linearantriebs in dem Bereich sprechen, der dem Schwenkvorgang entspricht. Sofern der Linearantrieb als Hydraulikzylinder ausgebildet ist, kann es sich um eine Endlagendämpfung handeln, die z.B. dadurch realisierbar ist, dass ein Ein- bzw. Ausströmen von Hydraulikflüssigkeit nahe der Endlage verlangsamt wird.

Im Folgenden wird die Erfindung anhand von Figuren beschrieben. Die Figuren sind lediglich beispielhaft und schränken den allgemeinen Erfindungsgedanken nicht ein.

Es zeigen
- Fig. 1: eine perspektivische Darstellung einer erfindungsgemäßen Heuwerbungsmaschine;
- Fig. 2: eine Seitenansicht eines Teils der Heuwerbungsmaschine entsprechend der Richtung II in Fig. 1;
- Fig. 3: eine Schnittdarstellung des Teils der Heuwerbungsmaschine aus Fig. 2 in einem ersten Zustand;
- Fig. 4: eine Schnittdarstellung des Teils der Heuwerbungsmaschine aus Fig. 2 in einem zweiten Zustand; sowie
- Fig. 5: eine Schnittdarstellung des Teils der Heuwerbungsmaschine aus Fig. 2 in einem dritten Zustand.

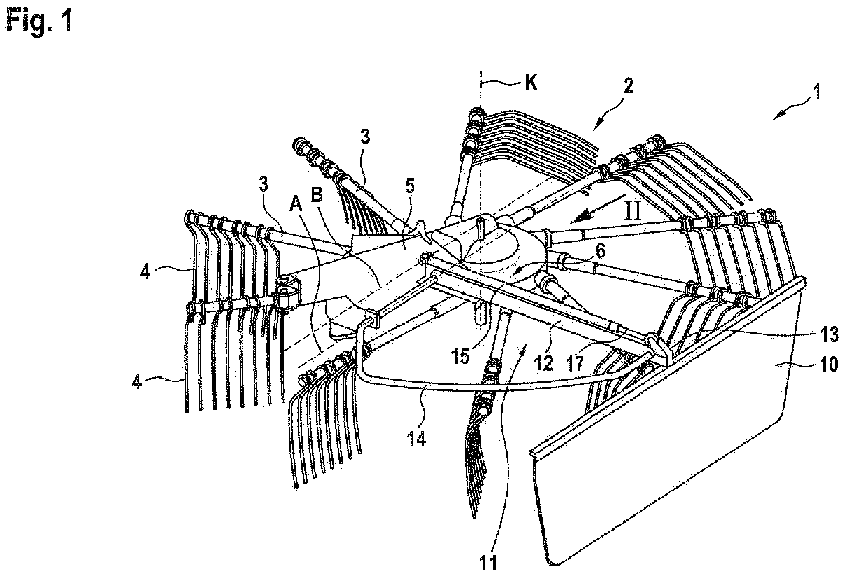

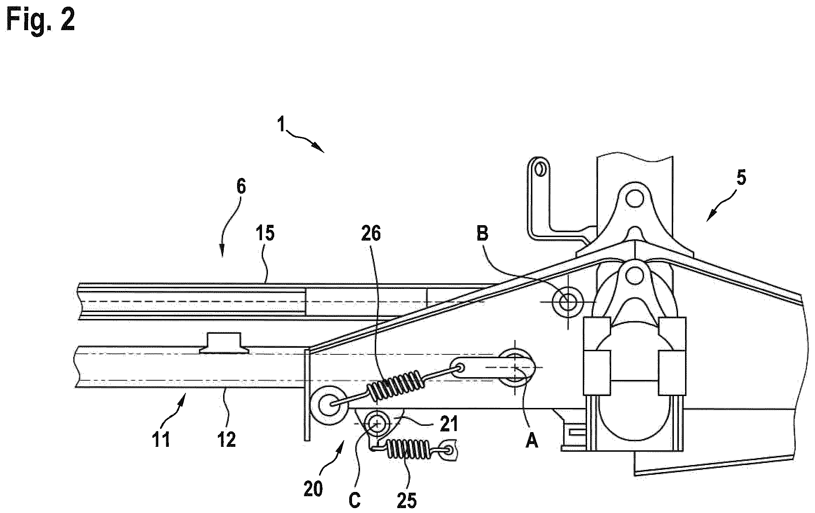

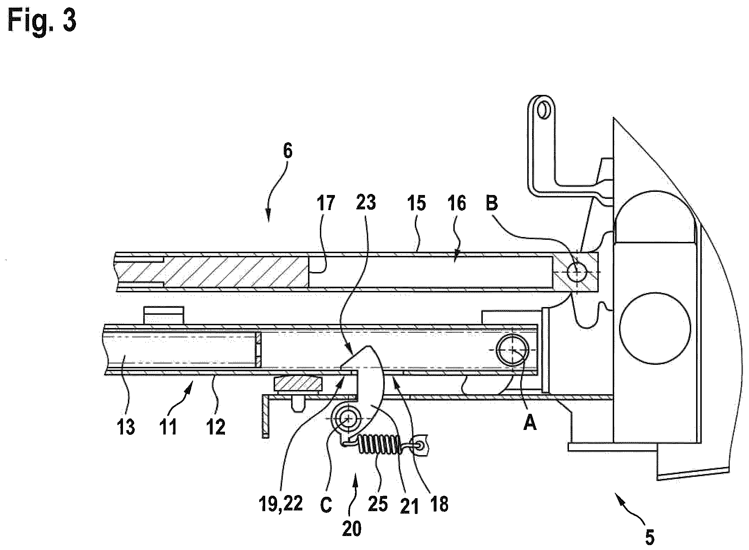

Fig. 1 zeigt eine Heuwerbungsmaschine 1, in diesem Fall einen Kreiselschwader, gemäß der vorliegenden Erfindung. An einem Rahmen 5 ist ein Rechkreisel 2 um eine Rotationsachse bzw. Kreiselachse K drehbar gelagert. Die Kreiselachse K verläuft in diesem Beispiel senkrecht, könnte aber auch gegenüber der Senkrechten geneigt sein. Der Rechkreisel 2 weist eine Mehrzahl von Zinkenarmen 3 auf, von denen jeder wiederum eine Mehrzahl von Zinken 4 trägt. In diesem Beispiel ist jeder Zinkenarm 3 um seine Längsachse schwenkbar, so dass im Zuge einer Rotation um die Kreiselachse K die Zinken 4 abwechselnd zwischen einer annähernd senkrechten Position und einer annähernd waagerechten Position verschwenkt werden. In der annähernd senkrechten Position, welche in Fig. 1 im linken Bereich des Rechkreisels 2 erkennbar ist, werden die Zinken 4 in Bodennähe geführt, so dass sie am Boden befindliches Erntegut, genauer gesagt Halmgut wie Gras oder Heu, erfassen und entsprechend der Drehbewegung des Rechkreisels 2 mitführen. Um zu verhindern, dass das Erntegut in unkontrollierter Weise weggeschleudert wird, weist die Heuwerbungsmaschine 1 ein Fangelement 10 auf, welches in diesem Fall als Schwadtuch ausgebildet ist. In der in Fig. 1 dargestellten Position erstreckt sich das Fangelement 10 senkrecht, und zwar außerhalb des Rotationsbereichs des Rechkreisels 2. Durch seine geschlossene, flächige Gestalt fängt das Fangelement 10 Erntegut auf, so dass dieses an einer definierten Position zu einem Schwad gelegt werden kann. Details der Funktionsweise der Heuwerbungsmaschine werden nachfolgend insbesondere mit Bezug auf die Detailansicht in Fig.2 erläutert sowie mit Bezug auf die Schnittdarstellungen in Fig. 3-5, bei denen die Schnittebene parallel zur Zeichenebene in Fig. 2 verläuft.

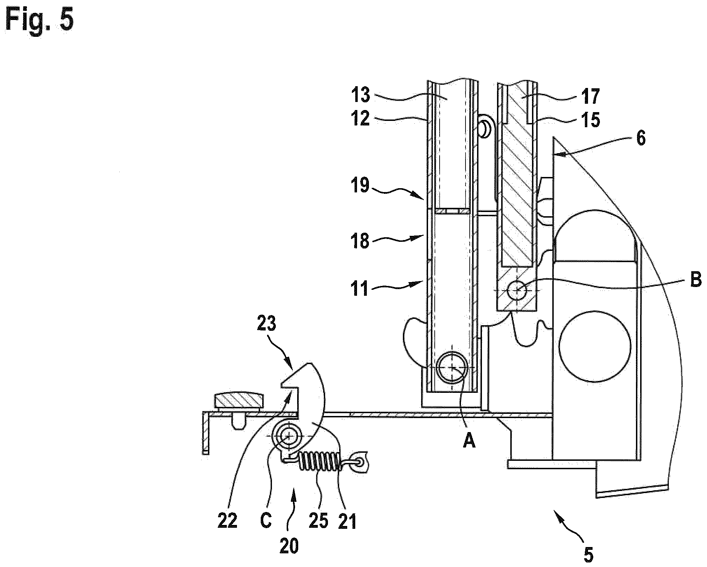

Das Fangelement 10 ist über einen Tragarm 11 mit dem Rahmen 5 verbunden. Der Tragarm 11 weist einen Basisteil 12 auf, der um eine waagerechte Tragarmachse A schwenkbar mit dem Rahmen 5 verbunden ist, sowie einen Verschiebeteil 13, der über dem Basisteil 12 verschiebbar ist zwischen einer Innenposition (welche in Fig. 1 dargestellt ist) sowie einer weiter von der Tragarmachse A entfernten Außenposition. Hierdurch kann das Fangelement 10 in unterschiedlichem Abstand zur Kreiselachse K positioniert und eine Schwadbreite verändert werden. Durch die Schwenkbarkeit des Basisteils 12 kann der Tragarm 11 insgesamt zwischen einer in Fig. 1 - 4 gezeigten, abgesenkten Aktivposition und einer in Fig. 5 gezeigten, angehobenen Passivposition verschwenkt werden. Sowohl die Bewegung des Verschiebeteils 13 als auch die Bewegung des Tragarms 11 werden durch einen als Linearantrieb fungierenden Hydraulikzylinder 6 bewirkt. Der Hydraulikzylinder 6 ist über eine Antriebs-Schwenkachse B mit dem Rahmen 5 verbunden. Die Antriebs-Schwenkachse B verläuft parallel zur Tragarmachse A, ist allerdings sowohl vertikal als auch horizontal zu dieser versetzt, wie insbesondere in Fig. 2 - 5 erkennbar ist. Der Hydraulikzylinder 6 weist ein Zylindergehäuse 15 mit einem Innenraum 16 auf sowie eine demgegenüber verschiebbare Kolbenstangeneinheit 17. Während das Zylindergehäuse 15 über die Antriebs-Schwenkachse B mit dem Rahmen 5 verbunden ist, ist die Kolbenstangeneinheit 17 mit dem Verschiebeteil 13 sowie dem Fangelement 10 verbunden. Durch Veränderung des Drucks bzw. des Volumens einer im Innenraum 16 angeordneten Hydraulikflüssigkeit kann eine Kraft zwischen dem Zylindergehäuse 15 und der Kolbenstangeneinheit 17 erzeugt werden. Diese Kraft wirkt einerseits auf eine Verschiebung des Verschiebeteils 13 gegenüber dem Basisteil 12 hin, andererseits erzeugt sie ein Drehmoment um die Tragarmachse A, welches auf eine Schwenkbewegung des Tragarms 11 hinwirkt.

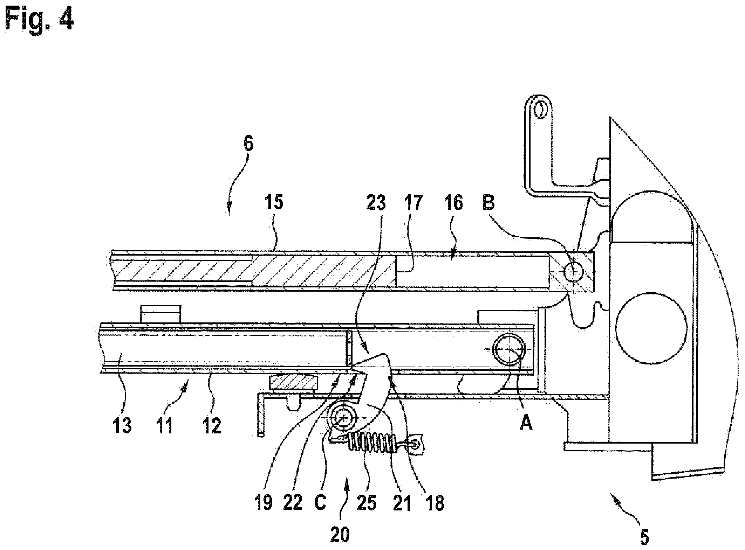

Für den störungsfreien Betrieb muss verhindert werden, dass sich die beiden Bewegungen unkontrolliert überlagern. Insbesondere soll verhindert werden, dass der Tragarm 11 aus der Aktivposition aufwärts in die Passivposition schwenkt, bevor der Verschiebeteil 13 die Innenposition erreicht hat, also gewissermaßen vollständig eingefahren ist. Um dies zu gewährleisten, ist ein Rückhaltemechanismus 20 vorgesehen, mit einem Rückhalteelement 21, das um eine Rückhalteelement-Schwenkachse C schwenkbar am Rahmen 5 gelagert ist. Während sich der Tragarm 11 in der Aktivposition befindet und der Verschiebeteil 13 noch nicht die Innenposition erreicht hat, ist das Rückhalteelement 21 teilweise in eine Ausnehmung 18 des Basisteils 12 eingeführt. Dabei hintergreift ein vorspringender Rückhalteabschnitt 22 des Rückhalteelements 21 einen seitlich der Ausnehmung 18 ausgebildeten Randabschnitt 19. Durch diesen Formschluss wird das Aufwärtsschwenken des Tragarms 11 gegenüber dem Rahmen 5 verhindert. Ein erstes Federelement 25, welches hier als Schraubenfeder ausgebildet ist, ist zwischen dem Rückhalteelement 21 und dem Rahmen 5 zwischengeordnet, wodurch das Rückhalteelement 21 in Richtung auf eine in Fig. 3 dargestellte Verriegelungsposition vorgespannt wird. Wird der Verschiebeteil 13 durch die Wirkung des Hydraulikzylinders 6 in Richtung auf die Tragarmachse A herangezogen, verbleibt das Rückhalteelement 21 zunächst in der Verriegelungsposition, bis der Verschiebeteil 13 die Innenposition erreicht. Beim Erreichen der Innenposition stößt der Verschiebeteil 13 gegen das Rückhalteelement 21 und schiebt dieses, wie in Fig. 4 dargestellt, entgegen der Kraft des ersten Federelements 25 aus der Verriegelungsposition in eine Freigabeposition. Dabei wirkt der Verschiebeteil 13 teilweise mit einem abgeschrägten Rampenabschnitt 23 des Rückhalteelements 21 zusammen.

Durch das Verstellen des Rückhalteelements 21 in die Freigabeposition, in welcher der Formschluss zwischen dem Rückhalteabschnitt 22 und dem Randabschnitt 19 aufgehoben ist, kann der Tragarm 11, dem oben erwähnten Drehmoment folgend, aufwärts in die Passivposition geschwenkt werden, welche in Fig. 5 dargestellt ist. Der Hydraulikzylinder 6 weist dabei eine Endlagendämpfung auf, die dafür sorgt, dass die Hydraulikflüssigkeit den Innenraum 16 weniger schnell verlassen kann bzw. in diesen hinein gelangen kann, wenn sich die Kolbenstangeneinheit 17 im Bereich ihrer Endlage befindet, also in größter Nähe zur Antriebs-Schwenkachse B. Die Endlagendämpfung sorgt dafür, dass das Schwenken des Tragarms 11 vergleichsweise langsam erfolgt, während das Verschieben des Verschiebeteils 13 zwischen der Innenposition und der Außenposition vergleichsweise schnell erfolgt.

Das Verschwenken des Tragarms 11 aus der Passivposition zurück in die Aktivposition erfolgt einerseits durch den Hydraulikzylinder 6, sowie andererseits durch ein zweites Federelement 26, das ebenfalls als Schraubenfeder ausgebildet ist und zwischen dem Rahmen 5 und dem Basisteil 12 des Tragarms 11 bewirkt. Durch dieses zweite Federelement 26 wird ein zusätzliches Drehmoment erzeugt, das den Tragarm 11 in Richtung auf die Aktivposition beaufschlagt. Hierdurch wird das Schwenken in die Aktivposition unterstützt und es wird effektiv verhindert, dass sich der Verschiebeteil 13 in Richtung auf die Außenposition verstellt, bevor der Tragarm 11 die Aktivposition erreicht hat. Beim Erreichen der Aktivposition wirkt der Randabschnitt 19 des Basisteils 12 mit dem Rampenabschnitt 23 zusammen. Es erfolgt eine Kraftumlenkung, wobei die genannten Abschnitte 19, 23 aneinander vorbeigleiten und das Rückhalteelement 21 aus der Verriegelungsposition ausgelenkt wird, so dass es wiederum in die Ausnehmung 18 eingeführt werden kann, bevor es, der Spannung des ersten Federelements 25 folgend, wieder in die Verriegelungsposition zurückkehrt, wie in Fig. 3 dargestellt.

## Patentansprüche

1. Heuwerbungsmaschine (1), mit einem Rechkreisel (2) sowie einem diesem zugeordneten Fangelement (10), welches über einen Tragarm (11) mit einem Rahmen (5) verbunden ist, wobei ein Basisteil (12) des Tragarms (11) um eine Tragarmachse (A) schwenkbar mit dem Rahmen (5) verbunden ist, um den Tragarm (11) zwischen einer abgesenkten Aktivposition und einer angehobenen Passivposition zu verschwenken, und ein Verschiebeteil (13), mit dem das Fangelement (10) verbunden ist, gegenüber dem Basisteil (12) zwischen einer Innenposition und einer weiter von der Tragarmachse (A) entfernten Außenposition verschiebbar ist, um eine Längenverstellung des Tragarms (11) zu bewirken, wobei durch einen zwischen dem Rahmen (5) und dem Verschiebeteil (13) wirkenden Linearantrieb (6) der Verschiebeteil (13) in die Innenposition verschiebbar ist und der Tragarm (11) in die Passivposition verschwenkbar ist, **dadurch gekennzeichnet, dass**
ein Rückhaltemechanismus (20) dazu eingerichtet ist, den Tragarm (11) in der Aktivposition zu halten, bis der Verschiebeteil (13) die Innenposition erreicht hat, wobei der Tragarm (11) in der Aktivposition arretiert ist, während sich der Verschiebeteil (13) in der Außenposition oder zwischen Außenposition und Innenposition befindet.

2. Heuwerbungsmaschine nach Anspruch 1, **dadurch gekennzeichnet, dass** der Verschiebeteil (13) mechanisch mit dem Rückhaltemechanismus (20) zusam menwirkt.

3. Heuwerbungsmaschine nach einem der vorangehenden Ansprüche, **dadurch gekennzeichnet, dass** der Rückhaltemechanismus (20) ein verstellbar am Rahmen (5) angeordnetes Rückhalteelement (21) aufweist, das in einer Verriegelungsposition mit dem Basisteil (12) eingreift und diesen in einer Freigabeposition freigibt.

4. Heuwerbungsmaschine nach Anspruch 3, **dadurch gekennzeichnet, dass** das Rückhalteelement (21) schwenkbar am Rahmen (5) angeordnet ist.

5. Heuwerbungsmaschine nach einem der Ansprüche 3 - 4, **dadurch gekennzeichnet, dass** das Rückhalteelement (21) über ein erstes Federelement (25) mit dem Rahmen (25) verbunden ist, welches das Rückhalteelement (21) in Richtung auf die Verriegelungsposition beaufschlagt.

6. Heuwerbungsmaschine nach einem der Ansprüche 3 - 5, **dadurch gekennzeichnet, dass** der Verschiebeteil (13) dazu eingerichtet ist, bei Annäherung an die Innenposition unmittelbar auf das Rückhalteelement (21) einzuwirken und dieses aus der Verriegelungsposition zu schieben.

7. Heuwerbungsmaschine nach einem der Ansprüche 3 - 6, **dadurch gekennzeichnet, dass** das Rückhalteelement (21) in der Verriegelungsposition teilweise in eine Ausnehmung (18) des Basisteils (12) eingeführt ist, wobei ein Rückhalteabschnitt (22) des Rückhalteelements (21) einen randseitig der Ausnehmung (18) ausgebildeten Randabschnitt (19) des Basisteils (12) hintergreift.

8. Heuwerbungsmaschine nach einem der Ansprüche 3 - 7, **dadurch gekennzeichnet, dass** das Rückhalteelement (21) einen Rampenabschnitt (23) aufweist, mit welchem der Basisteil (12) bei Annäherung an die Aktivposition zusammenwirkt, um das Rückhalteelement (21) aus der Verriegelungsposition zu schieben.

9. Heuwerbungsmaschine nach einem der Ansprüche 5 - 8, **dadurch gekennzeichnet, dass** der Basisteil (12) über ein zweites Federelement (26) mit dem Rahmen (5) verbunden ist, welches den Basisteil (12) in Richtung auf die Aktivposition beaufschlagt.

10. Heuwerbungsmaschine nach einem der vorangehenden Ansprüche, **dadurch gekennzeichnet, dass** der Linearantrieb (6) dazu eingerichtet ist, beim Verstellen des Verschiebeteils (13) mit einer höheren Stellgeschwindigkeit zu arbeiten als beim Verschwenken des Tragarms (11).

## Claims

1. Haymaking machine (1) comprising a rotary rake (2) and a catching element (10) associated therewith, which is connected to a frame (5) via a support arm (11), wherein a base part (12) of the support arm (11) is connected to the frame (5) so as to be pivotable about a support arm axis (A) in order to pivot the support arm (11) between a lowered active position and a raised passive position, and a moving part (13), to which the catching element (10) is connected, is movable relative to the base part (12) between an inner position and an outer position further away from the support arm axis (A), in order to effect a length adjustment of the support arm (11), wherein the moving part (13) can be moved into the inner position and the support arm (11) can be pivoted into the passive position by a linear drive (6) acting between the frame (5) and the moving part (13), **characterized in that**
a retaining mechanism (20) is designed to hold the support arm (11) in the active position until the moving part (13) has reached the inner position, wherein the support arm (11) is locked in the active position while the moving part (13) is in the outer position or between the outer position and the inner position.

2. Haymaking machine according to claim 1, **characterized in that** the moving part (13) interacts mechanically with the retaining mechanism (20).

3. Haymaking machine according to any of the preceding claims, **characterized in that** the retaining mechanism (20) has a retaining element (21) which is adjustably arranged on the frame (5) and which engages with the base part (12) in a locking position and releases it in a release position.

4. Haymaking machine according to claim 3, **characterized in that** the retaining element (21) is pivotally arranged on the frame (5).

5. Haymaking machine according to any of claims 3 to 4,
**characterized in that** the retaining element (21) is connected to the frame (25) via a first spring element (25) which loads the retaining element (21) in the direction of the locking position.

6. Haymaking machine according to any of claims 3 to 5,
**characterized in that** the moving part (13) is designed to act directly on the retaining element (21) when approaching the inner position and to push said retaining element out of the locking position.

7. Haymaking machine according to any of claims 3 to 6,
**characterized in that** the retaining element (21), in the locking position, is partially inserted into a recess (18) in the base part (12), wherein a retaining portion (22) of the retaining element (21) engages behind an edge portion (19) of the base part (12) that is formed on the edge of the recess (18).

8. Haymaking machine according to any of claims 3 to 7,
**characterized in that** the retaining element (21) has a ramp portion (23) with which the base part (12) interacts when approaching the active position in order to push the retaining element (21) out of the locking position.

9. Haymaking machine according to any of claims 5 to 8,
**characterized in that** the base part (12) is connected to the frame (5) via a second spring element (26) which loads the base part (12) in the direction of the active position.

10. Haymaking machine according to any of the preceding claims,
**characterized in that** the linear drive (6) is designed to operate at a higher control speed when adjusting the moving part (13) than when pivoting the support arm (11).

## Revendications

1. Faneuse (1) comportant un rotor ramasseur (2) ainsi qu'un déflecteur (10), associé, relié par un bras (11) à un châssis (5),
- une partie de base (12) du bras (11) étant reliée au châssis (5) de manière pivotante autour d'un axe de bras (A) pour basculer le bras (11) entre une position active, abaissée et une position passive, relevée, ainsi qu'une partie coulissante (13) à laquelle est relié un déflecteur (10), en étant coulissante par rapport à la partie de base (12) entre une position rentrée et une autre position extérieure, éloignée de l'axe (A) du bras, pour le réglage longitudinal du bras (11),
- un entraînement linéaire (6) de la partie coulissante (13) agissant entre le châssis (5) et la partie coulissante (13) pour être coulissée en position rentrée et le bras (11) se bascule dans la position passive,
faneuse **caractérisée en ce que**
un mécanisme d'arrêt (20) maintient le bras (11) dans la position active jusqu'à ce que la partie coulissante (13) ait atteint la position rentrée,
* le bras (11) étant bloqué en position active pendant que la partie coulissante (13) est dans la position déployée ou entre la position déployée et la position rentrée.

2. Faneuse selon la revendication 1,
**caractérisée en ce que**
la partie coulissante (13) coopère mécaniquement avec le mécanisme de retenue (20).

3. Faneuse selon l'une des revendications précédentes,
**caractérisée en ce que**
le mécanisme de retenue (20) comprend un élément de retenue (21) monté réglable sur le châssis (5) et qui vient prendre dans la partie de base (12) en position verrouillée et libère cette partie en position de libération.

4. Faneuse selon la revendication 3,
**caractérisée en ce que**
l'élément de retenue (21) est monté pivotant sur le châssis (5).

5. Faneuse selon l'une des revendications 3-4,
**caractérisée en ce que**
l'élément de retenue (21) est relié au châssis (5) par un premier ressort (25), qui agit sur l'élément de retenue (21) dans le sens de la position de verrouillage.

6. Faneuse selon l'une des revendications 3-5,
**caractérisée en ce que**
la partie coulissante (13) agit directement sur l'élément de retenue (21) lorsqu'on se rapproche de la position rentrée et le coulisse hors de la position verrouillée.

7. Faneuse selon l'une des revendications 3-6,
**caractérisée en ce que**
l'élément de retenue (21) s'engage partiellement en position de verrouillage dans un évidement (18) de la partie de base (12),
* un segment de retenue (22) de l'élément de retenue (21) venant prendre contre un segment de bord (19) de la partie de base (12) sur le côté du bord de l'évidement (18).

8. Faneuse selon l'une des revendications 3-7,
**caractérisée en ce que**
l'élément de retenue (21) a un segment de rampe (23) avec lequel la partie de base (12) coopère lorsqu'on se rapproche de la position active pour coulisser l'élément de retenue (21) hors de la position de verrouillage.

9. Faneuse selon l'une des revendications 5-8,
**caractérisée en ce que**
la partie de base (12) est reliée par un second ressort (26) au châssis (5) qui sollicite la partie de base (12) en direction de la position active.

10. Faneuse selon l'une des revendications précédentes,
**caractérisée en ce que**
l'entraînement linéaire (6) est conçu pour qu'au déplacement de la partie coulissante (13) fonctionner avec une vitesse de déplacement supérieure à celle du pivotement du bras (11).
